(19) Europäisches Patentamt
European Patent Office
Office européen des brevets

(11) **EP 3 293 903 B1**

(12) **EUROPÄISCHE PATENTSCHRIFT**

(45) Veröffentlichungstag und Bekanntmachung des Hinweises auf die Patenterteilung:
**08.01.2020 Patentblatt 2020/02**

(51) Int Cl.:
**H04L 1/00** *(2006.01)* **H04L 1/08** *(2006.01)*

(21) Anmeldenummer: **17183597.8**

(22) Anmeldetag: **27.07.2017**

(54) **VORRICHTUNG UND VERFAHREN ZUR ÜBERTRAGUNG VON DATEN**

DEVICE AND METHOD FOR TRANSFERRING DATA

DISPOSITIF ET PROCÉDÉ DE TRANSMISSION DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2016 DE 102016215238**
**16.12.2016 DE 102016225224**

(43) Veröffentlichungstag der Anmeldung:
**14.03.2018 Patentblatt 2018/11**

(73) Patentinhaber: **VOLKSWAGEN AKTIENGESELLSCHAFT**
**38440 Wolfsburg (DE)**

(72) Erfinder: **Hehn, Dr. Thorsten**
**38448 Wolfsburg (DE)**

(56) Entgegenhaltungen:
**US-A1- 2009 307 559     US-A1- 2013 148 569**
**US-B1- 6 728 920**

**Beschreibung**

Die Erfindung betrifft ein Verfahren zur digitalen Übertragung von Datenblöcken über einen gestörten Übertragungskanal zu mindestens einer Empfangsstation. Der Vorschlag betrifft weiterhin eine angepasste Sendestation und eine angepasste Empfangsstation zur Verwendung bei dem Verfahren. Der Vorschlag betrifft ebenfalls ein Kraftfahrzeug in dem eine angepasste Sende- und/oder Empfangsstation verbaut ist.

Hintergrund der Erfindung

Für das Szenario von mit Funkkommunikationsmodulen ausgestatteten Fahrzeugen, die im öffentlichen Straßenverkehr direkt miteinander kommunizieren, sei es für ein kooperatives oder autonomes Fahren, ist eine sehr hohe Verlässlichkeit für sicherheitskritische Anwendungen sehr wichtig. Techniken für die Fahrzeug-zu-Fahrzeug Direktkommunikation wurden bereits entwickelt und werden weiterentwickelt. Als Beispiel werden erwähnt die Fahrzeug-Direktkommunikation über WLAN, hier insbesondere die Variante nach dem WLAN Standard IEEE 802.11 p. Bei dieser Technik werden zur Kommunikation zwischen den Fahrzeugen ad hoc WLAN Netze aufgebaut (Kommunikation im Bereich der "Ad Hoc Domain").

Fahrzeugkommunikation ist aber auch im Bereich der Mobilfunknetze möglich. Bei dieser Technik muss allerdings die Basisstation die Nachrichten von Fahrzeug zu Fahrzeug vermitteln. Das ist der Bereich, wo die Kommunikation in der sogenannten "Infrastructure Domain" stattfindet. Für die kommende Mobilfunkgeneration wird auch die Fahrzeugdirektkommunikation ermöglicht. Bei LTE heißt diese Variante LTE-V, bei der 5G Initiative heißt diese Variante D2D.

Typische Kommunikations-Szenarien sind Sicherheitsszenarien, Verkehrseffizienzszenarien und Infotainment. Für den Bereich Sicherheit werden folgende Szenarien genannt: "Cooperative Forward Collision Warning", "Pre-Crash Sensing/Warning", "Hazardous Location Warning". In diesen Bereichen tauschen die Fahrzeuge untereinander Informationen wie Position, Richtung und Geschwindigkeit aus, auch Parameter wie Größe und Gewicht. Weitere Informationen die übertragen werden betreffen Absichtsinformationen, wie Fahrzeug beabsichtigt zu überholen, Fahrzeug biegt links/rechts ab, usw. die für das kooperative Fahren interessant sind. Dabei werden oft Sensordaten übermittelt. Falls eine Gefahrensituation vorliegt und der Fahrer nicht reagiert, könnte das Auto automatisch abbremsen, so dass ein Unfall verhindert wird oder zumindest die Folgen bei dem unvermeidlichen Unfall möglichst gering gehalten werden.

Die Fahrzeug-zu-Fahrzeug-Kommunikation wird oft auch als Car-to-Car-Kommunikation (C2C) bezeichnet. Im Englischen ist die Bezeichnung Vehicle-to-Vehicle-Communication (V2V) gebräuchlich. Damit ist der direkte Informationsaustausch zwischen fahrenden Fahrzeugen gemeint. Mit dieser mobilen Kommunikation können funktionsfähige Funknetze und neue Anwendungen realisiert werden. Dazu gehören rechtzeitige Informationen über Straßen- und Verkehrsverhältnisse wie Informationen über die Straßen-Beschaffenheit, Glatteis, Aquaplaning, Unfälle oder stehengebliebene Fahrzeuge. Bei dieser sicherheitsrelevanten Anwendung sendet der entsprechende Verkehrsteilnehmer mit den Daten aus dem Navigationssystem den Hinweis auf den Gefahrenort.

Weitere, den Verkehrsfluss betreffende Informationen, sind Hinweise über Ampelphasen, Stop-and-Go-Fahrten oder ständiges Anfahren und Anhalten an Baustellen, etc. Auch kann die Parkplatzsuche resp. die Information über freie Parkplatzkapazitäten in eine solche Fahrzeug-zu-Fahrzeug-Kommunikation einbezogen werden. Des Weiteren wird das intelligente Kolonnenfahren als Anwendungsfall genannt, welches im Englischen unter dem Begriff "High Density Platooning" bekannt ist. Dabei werden die Abstände zwischen den Fahrzeugen der Kolonne z.B. LKWs der jeweiligen Verkehrssituation angepasst und geregelt. Ziel ist es den Abstand zwischen den Kolonnenfahrzeugen möglichst zu verringern um den Energieverbrauch zu senken. Dazu müssen ständig Nachrichten zwischen den Kolonnenfahrzeugen ausgetauscht werden.

Oft werden standardisierte Nachrichten über die Luftschnittstelle zwischen den Fahrzeugen ausgetauscht. Die Nachrichten über die aktuelle Verkehrssituation werden in sogenannten ITS-Stationen (Intelligent Transport System) verwaltet und zyklisch oder Ereignisbedingt gesendet. Es gibt die Cooperative Awareness Message (CAM), die Decentralized Environmental Notification Message (DENM), Signal Phase and Time Nachricht (SPaT) und die Topology Specification Nachricht (TO-PO).

Die von einem Fahrzeug ausgesendeten Funktelegramme enthalten die per GPS-System ermittelte Fahrzeugposition nebst Zeit- und Geschwindigkeitsangabe, darüber hinaus wird passend zu der Verkehrssituation der Bereich festgelegt, in dem andere Fahrzeuge gewarnt werden müssen und das Ereignis wird codiert übertragen.

Die Fahrzeuge, die die Funktelegramme empfangen, können als Repeater arbeiten und verbreiten die Nachricht weiter, wodurch der Informationsraum vergrößert wird. Wie weit die Nachricht verbreitet wird, liegt an der Relevanzzone, das ist der Bereich, der für das Ereignis von Relevanz ist. Bei einer kurzen Bremsung ist die Relevanzzone natürlich wesentlich kleiner als bei einem Hinweis auf einen Stau. Diese Relevanzzone wird von dem sendenden Fahrzeug vorgegeben, was dazu führt, dass die Verbreitung über die Repeater-Fahrzeuge einen geringeren oder größeren Bereich einschließt.

Die Auflistung zeigt, dass insbesondere im Bereich Sicherheit zeitkritische Datenübertragungen stattfinden. Daher ist die Verlässlichkeit der Fahrzeug-zu-Fahrzeug-Kommunikation von entscheidender Bedeutung.

Im Mobilfunk bedeutet Verlässlichkeit der Datenübertragung Vollständigkeit (alle gesendeten Nutzdaten kommen beim Empfänger an) und Korrektheit (die gesendeten Nutzdaten und die aus den empfangenen Daten zurückgewonnenen Nutzdaten stimmen überein). Dazu werden in den Mobilfunktechnologien verschiedene Methoden eingesetzt, z.B. Frequenzdiversität, räumliche Diversität, sinnvolle Wahl der Modulationsart und Modulationsparameter und des zu verwendenden Kanalcodes wie auch der Coderate, etc.!

Diversität ist eine grundlegende Methodik, um in der Nachrichtentechnik Übertragungen robust gegen Störungen zu machen. Das Grundprinzip von Diversität ist, dass unterschiedliche Repräsentationen einer bestimmten Information auf möglichst unabhängigen Kanälen zum Empfänger übertragen werden. Der Empfänger verwendet die Empfangsbeobachtungen von diesen unabhängigen Kanälen und kombiniert diese auf eine konstruktive Art und Weise. Dadurch lässt sich die ursprüngliche Information mit deutlich höherer Wahrscheinlichkeit rekonstruieren, als wenn nur eine einzelne Beobachtung in Betracht gezogen worden wäre. Die Robustheit der Kommunikation wird dadurch gesteigert und der Empfänger nimmt eine verlässliche Kommunikation mit geringer Latenz wahr.

Aus der US 6,728,920 B1 ist ein Verfahren für die Fehlerkorrektur bei der Übertragung von Daten bekannt. Dabei wird ein Datenblock, der in einer Nachricht gesendet werden soll, in einer Ausführungsform in zwei Segmente A, B eingeteilt. Für diese beiden Segmente wird eine Deltainformation gebildet, was durch eine XOR-Verknüpfung der einzelnen Bits beider Segmente A, B geschieht. In der Nachricht werden dann die beiden Segmente zusammen mit der Deltainformation jeweils versehen mit CRC-Prüfcode übertragen.

Aus der US 2013/0148569 A1 und US 2009/0307559 A1 ist ein System und Verfahren für die Übertragung von Daten mit ARQ und HARQ Technik bekannt, bei dem die Methode des "Chase Combining" als Variante der Softcombing-Technik eingesetzt wird.

Ein Beispiel wo von Soft-Combining im Mobilfunk Gebrauch gemacht wird ist das Hybrid Automatic Repeat Request- Verfahren HARQ, das bei LTE eingesetzt wird. Eine Beschreibung findet sich in EP 2 403 174 A1.

Die genannten unabhängigen Kanäle können zeitlich, frequenztechnisch oder durch andere Orthogonalisierungsschemata voneinander getrennt sein.

Die konstruktive Überlagerung am Empfänger lässt sich aber nur verwenden, wenn über die verschiedenen Kanälen das gleiche Nutzsignal übertragen wird. Bei fahrzeugrelevanten Themen tritt oftmals der Fall auf, dass Statusmeldungen (in Form z.B. von Nachrichten) übertragen werden. Diese unterscheiden sich nur geringfügig voneinander, aber sind nicht identisch. Dadurch muss der Empfänger jede Nachricht getrennt behandeln und profitiert beim Empfang nicht mehr davon, dass mehrere Meldungen an ihn übertragen werden.

Erfindung

Für die C2C-Kommunikation wurde erkannt, dass viele ähnliche Statusmeldungen mehrfach hintereinander gesendet werden. Die Erfindung setzt sich zum Ziel diese Zeitdiversität der Statusmeldungen zur Verbesserung der Signalauswertung auszunutzen. Dabei besteht das Problem, dass ein herkömmliches Soft-Combining wegen der doch vorhandenen Unterschiede in den Statusmeldungen nicht eingesetzt werden kann.

Es ist also Aufgabe der Erfindung, ein erweitertes Soft-Combining Verfahren zu schaffen, bei dem mehrere Empfangsbeobachtungen gemeinsam prozessiert werden können, selbst wenn ihnen nicht das gleiche Nutzsignal, sondern nur ähnliche Nutzsignale zu Grunde liegen, wie es im Bereich der C2C-kommunikation der Fall ist.

Diese Aufgabe wird durch ein Verfahren zur digitalen Übertragung von Datenblöcken gemäß Anspruch 1, eine Empfangsstation gemäß Anspruch 11, ein System nach Anspruch 13 und ein Kraftfahrzeug gemäß Anspruch 15 gelöst.

Die abhängigen Ansprüche beinhalten vorteilhafte Weiterbildungen und Verbesserungen der Erfindung entsprechend der nachfolgenden Beschreibung dieser Maßnahmen.

Das vorgeschlagene Verfahren dient zur digitalen Übertragung von Datenblöcken von einer Sendestation zu einer Empfangsstation. Dabei wird ein Datenblock auf der Sendeseite mit Fehlerschutzdaten versehen und der mit Fehlerschutz versehene Datenblock wird über einen gestörten Übertragungskanal zu der Empfangsstation übertragen. Das Verfahren kennzeichnet sich dadurch aus, dass für die Übertragung mindestens eines weiteren Datenblocks auf Sendeseite festgestellt wird, an welchen Stellen der weitere Datenblock sich von dem vorhergehenden Datenblock unterscheidet. Damit wird eine Deltainformation gewonnen. Die so gewonnene Deltainformation wird mit eigenen Fehlerschutzdaten versehen. Dann wird diese Deltainformation mit Fehlerschutz zu dem mit Fehlerschutz versehenen mindestens einem weiteren Datenblock hinzugefügt und der auf diese Weise erweiterte weitere Datenblock wird ebenfalls über den gestörten Übertragungskanal zu der Empfangsstation übertragen. Auf Empfangsseite folgt, dass der empfangene erste und der mindestens eine erweiterte weitere Datenblock inklusive Fehlerschutzanteil in der Empfangsstation abgespeichert wird. Dann folgt ein Schritt, dass zunächst die Deltainformation des mindestens einen erweiterten weiteren Datenblocks zurückgewonnen wird. Die zurückgewonnene Deltainformation wird auf den abgespeicherten vorhergehenden Datenblock angewendet um diesen in eine Form zu bringen, die ihn mit dem mindestens einen weiteren Datenblock vergleichbar macht. Der vorhergehende Datenblock wird also mit der Deltainformation so umgewandelt, dass er bis auf Fehler den gleichen Informationsgehalt hat, wie der weitere Datenblock. Durch Soft-Combining werden dann der empfangene mindestens eine weitere Datenblock und der umgewandelte empfangene vorhergehende Datenblock kombiniert. Schließlich wird dann aus dem kombinierten Datenblock die Nutzinformation des weiteren Datenblocks zurückgewonnen.

Durch das vorgeschlagene Verfahren werden deutliche Vorteile hinsichtlich Verlässlichkeit der Datenübertragung erreicht. Durch geschickte Wahl des Parameters n lassen sich sehr hohe Gewinne im Signal-zu-Störleistungsverhältnis erreichen, z.B. bei n = 2 bis zu 3 dB, bei n = 10 bis zu 10 dB, die vor allem für Chip-Entwickler für die Entwicklung von Funkmodems für die Automobilindustrie von Interesse sind.

Es ist sehr vorteilhaft, wenn die Deltainformation mit einem höheren Fehlerschutz versehen wird als der Nutzdatenteil des weiteren Datenblocks. Dadurch wird erreicht, dass die Deltainformation auch dann noch zurückgewonnen werden kann, wenn der Fehlerschutz für die Nutzdaten nicht mehr ausreicht. Da die Deltainformation kleiner ist als die Nutzdateninformation, ist das Verfahren noch effizient, wenn man sich einen höheren Fehlerschutz für die Deltainformation leistet.

Es ist vorteilhaft, wenn die Deltainformation angibt, an welchen Stellen in dem codierten weiteren Datenblock eine Dateninformation anders gesetzt ist als in dem vorhergehenden codierten Datenblock. Hier wird also angegeben, wo im Nutzdatenfeld Unterschiede sind und wo im Fehlerschutzfeld Unterschiede sind. Umgekehrt könnte die Deltainformation auch so angegeben werden, dass sie anzeigt an welchen Stellen in dem codierten vorhergehenden Datenblock eine Information anders gesetzt ist als in dem codierten weiteren Datenblock.

Der empfangene vorhergehende Datenblock und der mindestens eine erweiterte weitere Datenblock können jeweils in Form eines abgetasteten Signals vor oder nach der digitalen Demodulation abgespeichert werden. Werden sie nach der digitalen Demodulation abgespeichert, so können die Daten in Form eines Log Likelihood Ratio-Informationsblocks abgespeichert werden. Damit kann der Schritt des Anwendens der Deltainformation äußerst effizient mit Hilfe von Vorzeichenwechseln durchgeführt werden. Im anderen Fall sind Signalabtastwerte zu verarbeiten, was aufwendiger ist. Dann würde zur Anwendung der Deltainformation auf den abgespeicherten vorhergehenden Datenblock die Datenfolge für das Symbol, welches das Bit enthält, welches anders gesetzt sein soll, durch eine Datenfolge ersetzt werden, die das passende Symbol repräsentiert, bei dem das entsprechende Bit anders gesetzt ist.

Die Deltainformation könnte auch reziprok auf den abgespeicherten mindestens einen weiteren Datenblock angewendet werden und dann der umgewandelte mindestens eine weitere Datenblock und der vorhergehende Datenblock kombiniert werden. So könnte dann die Nutzinformation des vorhergehenden Datenblocks zurückgewonnen werden.

Die Kombination von dem umgewandelten Datenblock mit dem anderen Datenblock geschieht vorzugsweise durch Addition von einander entsprechenden Softinformationswerten der zu kombinierenden Datenblöcke.

Zur Zurückgewinnung des mindestens einen weiteren Datenblocks oder des vorhergehenden Datenblocks erfolgt jeweils eine Kanaldecodierung des jeweils kombinierten Datenblocks.

Soll die Deltainformation noch weiter minimiert werden, so ist es vorteilhaft wenn die Deltainformation nur angibt, an welchen Stellen in dem Nutzdatenfeld des weiteren Datenblocks eine Dateninformation anders gesetzt ist als in dem Nutzdatenfeld des vorhergehenden codierten Datenblocks. Hier beschränkt sich die Deltainformation auf Angaben für das Nutzdatenfeld.

Diese Variante des Verfahrens funktioniert effizient, wenn das Delta-Signal kompakt ist. Dies ist genau dann der Fall, wenn als Kanalcodierung eine lineare systematische Kodierung (Input-Signal ist an fest vorgegebenen Stellen des kodierten Signals auffindbar) eingesetzt wird. Dann beschränkt sich die zu übertragende Delta-Information auf Unterschiede im ursprünglichen Nutzsignal. Die Änderungen im Redundanzteil (Fehlerschutzdatenteil) des kodierten Signals kann sich der Empfänger im linearen Code sehr effizient selbst erschließen.

Das vorgeschlagene Verfahren kann für Blockcodes wie auch für Faltungscodes eingesetzt werden.

Zeichnungen

Ein Ausführungsbeispiel der Erfindung ist in den Zeichnungen dargestellt und wird nachfolgend anhand der Figuren näher erläutert.

Es zeigen:

Fig. 1 das Prinzip der Fahrzeugkommunikation über Mobilfunk;

Fig. 2 die Kombination von zwei zeitlich getrennten Datenübertragungen durch Addition, wovon eine die Wiederholung der ersten Datenübertragung ist;

Fig. 3 das Prinzip des "Soft Combining" im Mobilfunk;

Fig. 4 ein Blockschaltbild einer Sendestation und ein Blockschaltbild einer Empfangsstation gemäß der Erfindung;

Fig. 5 die Datenrahmenformate für zwei aufeinanderfolgende Datenübertragungen gemäß eines Ausführungsbeispiels der Erfindung;

Fig. 6 den Schritt der Anwendung der Deltainformation auf das Empfangsergebnis der ersten Datenübertragung;

Fig. 7 den Schritt der Kombination des Empfangsergebnisses der zweiten Datenübertragung mit dem durch Anwendung der Deltainformation geänderten Empfangsergebnisse der ersten Datenübertragung; und

Fig. 8    einen Ablaufplan für ein Ausführungsbeispiel des erfindungsgemäßen Verfahrens.

Detaillierte Beschreibung der Ausführungsbeispiele der Erfindung

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

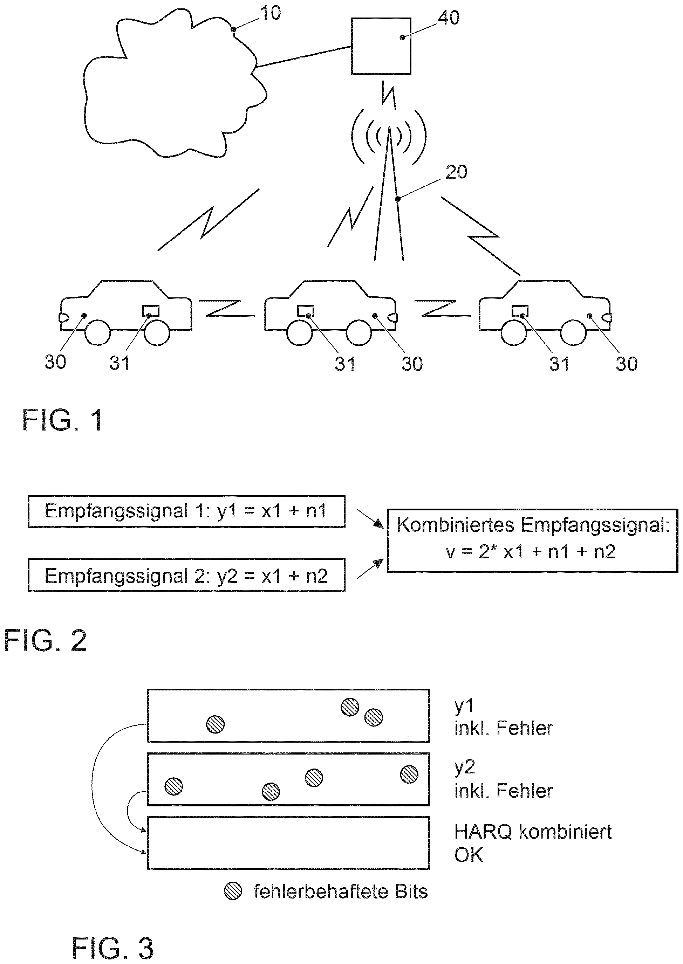

Fig. 1 zeigt das Prinzip der Fahrzeugkommunikation mittels Mobilfunk. Die Fahrzeuge sind mit Bezugszahl 30 versehen. Sie sind jeweils mit einer On-Board Unit 31 ausgestattet, die als Sende- und Empfangsstation für die Mobilkommunikation dient. Alle Nachrichten von den Fahrzeugen (Uplink) und zu den Fahrzeugen (Downlink) werden entweder über eine Basisstation geleitet, die eine Mobilfunkzelle bedient oder im Fall von Fahrzeugdirektkommunikation (Sidelink) unmittelbar zwischen den Fahrzeugen ausgetauscht. Befinden sich die Fahrzeuge innerhalb dieser Mobilfunkzelle, sind sie bei der Basisstation 20 (im Sprachgebrauch von LTE eNodeB genannt) angemeldet bzw. eingebucht. Verlassen sie die Mobilfunkzelle, werden sie an die benachbarte Zelle übergeben (Hand Over) und dementsprechend an der Basisstation 20 abgemeldet bzw. ausgebucht. Die Basisstation 20 stellt auch einen Zugang zum Internet 10 zur Verfügung, so dass die Fahrzeuge 30 bzw. alle anderen Mobilfunk-Teilnehmer in der Mobilfunkzelle mit Internetdaten versorgt sind. Dazu steht die Basisstation 20 über die sogenannte die S1-Schnittstelle mit dem EPC 40 (Evolved Packet Core) in Verbindung.

Neben der LTE Mobilfunktechnik sind die Fahrzeuge 30 im Beispiel ebenfalls mit der WLAN-Technologie nach IEEE 802.11 p Standard für die Fahrzeug-Direktkommunikation ausgestattet. Bei dieser Technik werden zur Kommunikation zwischen den Fahrzeugen ad hoc WLAN Netze aufgebaut (Kommunikation im Bereich der "Ad Hoc Domain"). Diese Technik wurde speziell entwickelt für den Austausch bestimmter Nachrichten untereinander auf lokaler Ebene. Dieser Datenaustausch betrifft auch sicherheitskritische Daten und funktioniert auch dann, wenn das Mobilfunknetz in einer Zelle einmal überlastet wäre oder auch in Gebieten mit schlechter Mobilfunknetzabdeckung. Auch die WLAN-Technik nach IEEE 802.11p ist in der On-Board Unit 31 integriert.

Für Einzelheiten zu der IEEE 802.11p Technik wird auf die verschiedenen Spezifikationen des Standards hingewiesen.

Bei der LTE Mobilfunktechnik wird im Rahmen des HARQ-Prozesses vielfach von der Technik des Soft-Combining Gebrauch gemacht. Bei der Funkkommunikation werden die Daten mit Fehlerschutz übertragen. Der HARQ-Prozess, entsprechend Hybrid Automatic Repeat Request, stellt einen guten Kompromiss dar zwischen der Anzahl der Fehlerschutzdaten pro übertragenen Datenblock und dem gewünschten Datendurchsatz. Je mehr Fehlerschutzdaten hinzugefügt werden, umso geringer wird die Anzahl an Nutzdaten, die pro Zeiteinheit übertragen werden kann. Aus diesem Grund wird bei LTE die HARQ Methode implementiert nach der Transportblöcke, die trotz des Fehlerschutzes nicht zurückgewonnen werden konnten, ggfs. mehrfach wiederholt werden, wobei bei jeder Wiederholung der Fehlerschutz sukzessive erhöht wird.

Dies bedeutet, dass ein Datenblock oder im Sprachgebrauch von Mobilfunkstandards ein Transportblock, in der Regel mit Vorwärtsfehlerkorrekturdaten FEC (Forward Error Correction) geschützt wird. Der Empfänger versucht, unter Verwendung der FEC-Daten den Transportblock zu dekodieren. Gelingt dies nicht, wird der Sender gebeten, zusätzliche Redundanz, d.h. mehr Fehlerschutzdaten zu senden. Mit den ursprünglich empfangenen Daten und der zusätzlichen Redundanz wird ein neuer Dekodierversuch gestartet.

Wie oben erwähnt, ist der HARQ-Prozess ein zentrales Element zum Sicherstellen der geforderten Verlässlichkeit bei der Datenübertragung. Dieser wird auf Senderseite installiert und sendet, basierend auf Antworten vom Empfänger, adaptiv zusätzliche Daten, die die Robustheit der Gesamtübertragung erhöhen. Die Paketfehlerrate hinter dem HARQ-Prozess ist deutlich geringer. Der HARQ-Prozess benötigt jedoch Zeit, daher erhöht er die Latenz der Datenübertragung.

Im Folgenden werden zwei herkömmliche Vorgehensweisen beschrieben um die Problematik genauer zu verdeutlichen. Erstens wird beschrieben, wie Statusmeldungen unabhängig voneinander von einem Empfänger prozessiert werden. Als Beispiel werden die schon erwähnten CAM-Nachrichten genannt, die über den IEEE 802.11p Standard übertragen werden. Zweitens wird die im Mobilfunk genutzte Technik des Soft-Combining erläutert. Von der Technik des Soft-Combining wird im Mobilfunk, insbesondere bei LTE mit dem (Hybrid Automatic Repeat Request) HARQ-Prozess, intensiv Gebrauch gemacht, weil es die effizienteste Art ist, Zeitdiversität für eine Verbesserung des Signal-Rausch-Verhältnisses auszunutzen und die Beobachtungen von unabhängigen Kanälen am Empfänger zu kombinieren.

Üblicherweise sendet jedes ausgestattete Fahrzeug 10 CAM Statusmeldungen pro Sekunde im Bereich der C2C-Kommunikation. In diesen Statusmeldungen informiert das Fahrzeug das Umfeld über seinen aktuellen Zustand, wie z.B. Position, Geschwindigkeit, etc. Die Statusmeldungen werden auf Sendeseite unabhängig voneinander prozessiert (Kanalcodierung, Modulation, etc.) und auch am Empfänger unabhängig voneinander bearbeitet. Die Tatsache, dass ein Großteil des Inhalts von aufeinanderfolgenden Statusmeldungen identisch ist (Header, nicht veränderte Daten, etc.) wird dabei nicht berücksichtigt. Ein Weglassen der nicht veränderlichen Information ist nicht möglich, damit jede Statusmeldung vollständig bleibt. Hier wird also keine Diversität ausgenutzt.

Beim Soft-Combining im Mobilfunk wird intensiv von Zeitdiversität Gebrauch gemacht, um Daten effizient an einen Empfänger zu liefern. Der Einfachheit halber wird ein sehr einfaches Schema betrachtet, bei dem die gleiche Repräsentation eines gegebenen Nutzsignals zu zwei unterschiedlichen Zeitpunkten über einen Kanal übertragen wird. Es wird davon ausgegangen, dass die Kanalrealisierungen zu den unterschiedlichen Zeitpunkten unabhängig voneinander sind. Der Sender überträgt ein Signal zu zwei unterschiedlichen Zeitpunkten (Wiederholungsschema). Der Empfänger empfängt zwei Aussendungen des Signals, die unabhängig voneinander durch unterschiedliche Kanalrealisierungen gestört wurden.

Das ist in der Fig. 2 gezeigt. Das Nutzsignal ist darin mit x1 bezeichnet. Das Störsignal, dass dem Nutzsignal überlagt ist, ist in Fig. 1 bei der ersten Aussendung mit n1 bezeichnet, bei der zweiten Aussendung mit n2. Es wird der Fall betrachtet, dass beide Signale, wenn unabhängig prozessiert, nicht zu einem gültigen Dekodierergebnis in einem Kanaldekoder, dem letzten Schritt in der Verarbeitungskette auf dem Data Link Layer, führen. Nun wird es überlagert, wie in der Fig. 1 gezeigt. Die empfangenen Signalwerte der beiden Empfangssignale werden zu einem überlagerten Signal kombiniert. Es handelt sich um eine sogenannte konstruktive Kombination der Signalwerte. Im einfachsten Fall wird diese Operation als "Equal Gain Combining" bezeichnet, dabei werden die Signalwerte der Empfangssignale gleichgewichtig addiert. Häufig wird bei dem konstruktiven Kombinieren die Methode des "Maximum Ratio Combining" benutzt. Dabei werden die Signalwerte mit dem Signal-Rausch-Verhältnis der Empfangsbeobachtung gewichtet und dann addiert. Das Ergebnis ist in Fig. 2, mit der Referenz y bezeichnet. Dies wird typischerweise mit den kontinuierlichen Werten (sogenannte Soft-Info in Form von der sogenannten Log Likelihood Ratio) getan und es wird eine Gesamtbeobachtung gebildet, die beide Teilbeobachtungen konstruktiv mit einbezieht, d.h. beide Teilbeobachtungen müssen in die richtige Phasenlage gebracht werden bevor sie kombiniert werden. Die Gesamtbeobachtung wird dem Kanaldekoder erneut zur Verfügung gestellt. Die Wahrscheinlichkeit für einen erfolgreichen Dekodiervorgang ist nun deutlich höher. Dies liegt daran, dass der Nutzanteil in beiden Empfangssignalen korreliert ist, wohingegen die Verzerrung, welche als additives Rauschen modelliert wird, unkorreliert ist. Das Signal-Störleistungsverhältnis des kombinierten Signals ist bis zu 3 dB besser als das jedes einzelnen Signals.

Die beiden Empfangsinformationen y1 und y2 werden im Rahmen des HARQ-Prozesses kombiniert. Es gilt:

Empfangssignal 1:

$$y1 = x1 + n1$$

Empfangssignal 2:

$$y2 = x1 + n2$$

Werden die beiden Empfangssignale y1 und y2 einzeln ausgewertet, kann es sein, dass wegen des Rauschanteils und der dadurch bedingten Fehler, die selbst durch den mitgelieferten Fehlerschutz nicht korrigierbar sind weder y1 noch y2 fehlerfrei ausgewertet werden können. Das Prinzip der Technik des Soft-Combining besteht darin, dass durch Addition beider Empfangssignale sich eine Verbesserung des Signal-Rausch-Abstandes ergibt und dadurch die Nutzinformation im kombinierten Signal doch noch fehlerfrei ausgewertet werden kann. Durch Addition ergibt sich

$$y = 2 * x1 + n1 + n2$$

als Resultat.

Dies ist in der Fig. 3 veranschaulicht. Die fehlerbehafteten Stellen in den Empfangssignalen y1 und y2 sind durch Schraffur illustriert. Durch Addition verbessert sich die Situation, weil die Stellen, die im y1 Signal fehlerbehaftet sind im Y2 Empfangssignal korrekt sind und umgekehrt im y2-Signal fehlerbehaftet sind im y1 Signal korrekt sind. Dies liegt daran, dass der Nutzanteil inklusive Fehlerschutz in beiden Empfangssignalen korreliert ist, wohingegen die Verzerrung, welche als additives Rauschen angesehen wird, unkorreliert ist. Das Signal-Störleistungsverhältnis des kombinierten Signals ist dann bis zu 3 dB besser als das jedes einzelnen Signals.

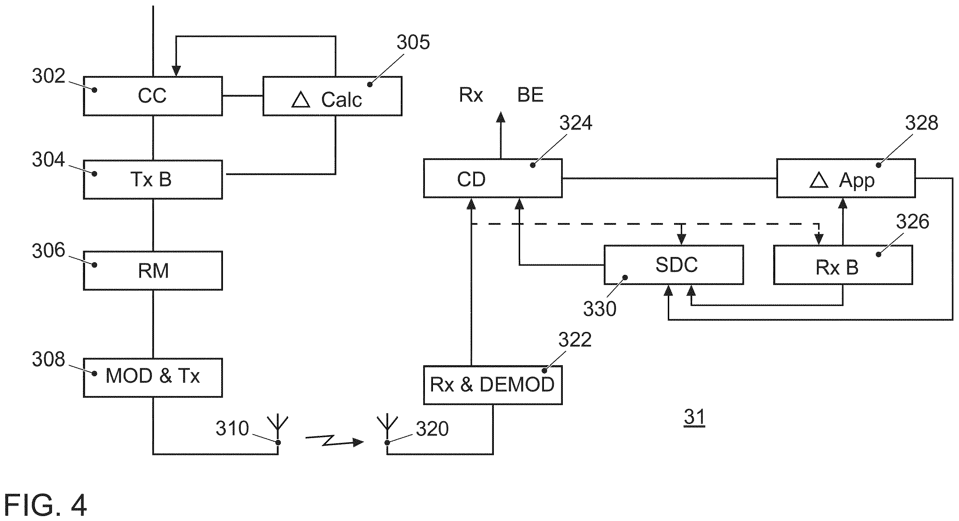

Fig. 4 zeigt den Teil der On-Board Unit 31, der für die Kommunikation über WLAN p ausgelegt ist. Der linke Teil der Fig. 4 zeigt den Teil der Sendestation, der für die Aufbereitung der Transportblöcke zum Senden zuständig ist. Im rechten Teil von Fig. 4 werden die für die Erfindung relevanten Teile gezeigt, die auf Empfangsseite in der Empfangsstation eine wichtige Rolle spielen.

Zunächst werden die Komponenten auf Sendeseite erläutert. Mit der Bezugszahl 302 ist ein Block zur Kanalcodierung bezeichnet. Dieser Block fügt also den Fehlerschutz zu den eigentlichen Nutzdaten des Transportblocks hinzu. Im Beispiel wird als Fehlerschutz-Code ein Reed-Solomon-Code berechnet und an die eigentlichen Nutzdaten als Block von Fehlerschutzdaten angehängt. Der RS-Code erfüllt beide Zwecke, Fehlerkorrektur und Fehlerdetektion. Wenn im Empfangssignal zu viele fehlerbehaftete Bits aufgetreten sind, so kann der RS-Code zwar diese nicht mehr korrigieren, aber in gewissen Grenzen noch anzeigen, welche Bits fehlerbehaftet sind.

Der fertig codierte Datenblock wird in einen Sendepuffer 304 geschoben. Bevor das für die Statusmeldung 1 kodierte Signal ausgesendet wird, wird in Block 305 der bitweise Unterschied für die fertig codierte Statusmeldung 2 gegenüber dem ersten kodierten Datenblock berechnet. Dieses Delta-Signal wird ebenfalls per Kanalcodierung mit Fehlerschutz versehen. Dabei wird ein höherer Fehlerschutz generiert als für die Nutzdaten des Datenblocks. Es kann z.B. ebenfalls ein RS-Code zu diesem Zweck verwendet werden, z.B. mit größerer Länge. Dieser mit Delta-Signal versehene Datenblock wird ebenfalls in dem Sendepufferspeicher 308 abgespeichert. Von dort wird der zu sendende Datenblock entnommen. Wann dies geschieht, entscheidet ein sogenannter Rate Matching Block 306. Es folgt die Modulation und die Sendesignalaufbereitung in der Modulations- und Sendeeinheit 308 und die Ausstrahlung des Datenrahmens über die Luftschnittstelle mit Hilfe der Sendeantenne 310. Als Übertragungstechnik wird bei WLAN die OFDM-Technik verwendet (Orthogonal Frequency-Division Multiplexing). Dies ist die bekannte Vielträgerübertragungstechnik, bei der Datensymbole auf die einzelnen Träger mittels QPSK (Quadrature Phase-Shift Keying) oder QAM (Quadrature Amplitude Modulation) moduliert werden. Für die Ausstrahlung des weiteren Datenrahmens wird sowohl das Nutzsignal als auch das generierte Delta-Signal des Datenrahmens gemeinsam moduliert und verschickt.

Auf Empfängerseite wird das über die Antenne 320 empfangene Signal in der Empfangs- und Demodulationseinheit 322 ausgewertet. Das Empfangssignal ist typischerweise auch fehlerbehaftet. Das Signal liegt nach Demodulation in Form eines sogenannten Log Likelihood Soft Decision Informationsblocks vor. Die einzelnen Bits der demodulierten Symbole werden dabei nicht per "Hard Decision" in feste Werte "1" und "0" eingeteilt, sondern es wird ein Wahrscheinlichkeitswert ermittelt, der angibt mit welcher Wahrscheinlichkeit der Wert eine "1" ist oder eine "0" ist. Anschließend wird der 10er-Logarithmus des Verhältnisses dieser Wahrscheinlichkeitswerte gebildet. Dieser Informationsblock gelangt in den Empfangspuffer 326 und wird dort abgespeichert. Der Informationsblock wird auch an die Kanaldekodierungseinheit 324 geliefert. Nur, wenn der Informationsblock fehlerfrei ausgewertet werden konnte, wird er an die nachfolgenden Komponenten in der Empfangsstation weitergereicht. Sonst wird auf den nächsten Informationsblock gewartet. Wenn auch der nächste Informationsblock nicht fehlerfrei dekodiert werden konnte, geschieht das Folgende. Dann wird in der Delta-Anwendungseinheit 328 das bei der Auswertung des zweiten Informationsblock zurückgewonnene Delta-Signal auf den noch im Empfangspuffer 326 vorhandenen ersten Informationsblock angewendet. Das Delta-Signal kann oft zurückgewonnen werden, weil es mit dem höheren Fehlerschutz versehen wurde.

Die Anwendung des Delta-Signal geschieht durch Bit-Flipping. also an den Stellen, die das Delta-Signal angibt, wird aus einer "1" eine "0" gesetzt oder aus einer "0" eine "1" gemacht. Bei Vorliegen des Informationsblocks als Log-Likelihood Ratio-Informationsblock kann das Bit-Flipping sehr effizient durch Vorzeichenwechsel bei den betreffenden Bitpositionen durchgeführt werden. Diese Operation macht aus dem ersten Informationsblock einen Informationsblock, der dem Informationsgehalt des zweiten Informationsblocks (Nutzsignal plus dessen Fehlerschutz) entspricht. Beide Informationsblöcke werden dadurch vergleichbar und können durch Soft Combining weiter verarbeitet werden. Dies geschieht auch in Block 330. In der Soft-Combining Einheit 330 wird der umgewandelte erste Informationsblock und der zweite Informationsblock addiert. Hier werden also die bitweisen Logarithmuswerte der Wahrscheinlichkeitsverhältniswerte addiert. Das Resultat wird nochmal an den Kanaldekodierer 324 geliefert, der erneut versucht die Nutzinformation des zweiten Informationsblocks zurück zu gewinnen. Dies gelingt dann auch oftmals wegen des schon zuvor beschriebenen Effektes der Erhöhung des Signal-Rauschabstandes durch die Kombination. Bei Erfolg der Kanaldekodierung werden die Nutzdaten an die nachfolgenden Bearbeitungsblöcke in der Empfangsstation 31 weitergegeben.

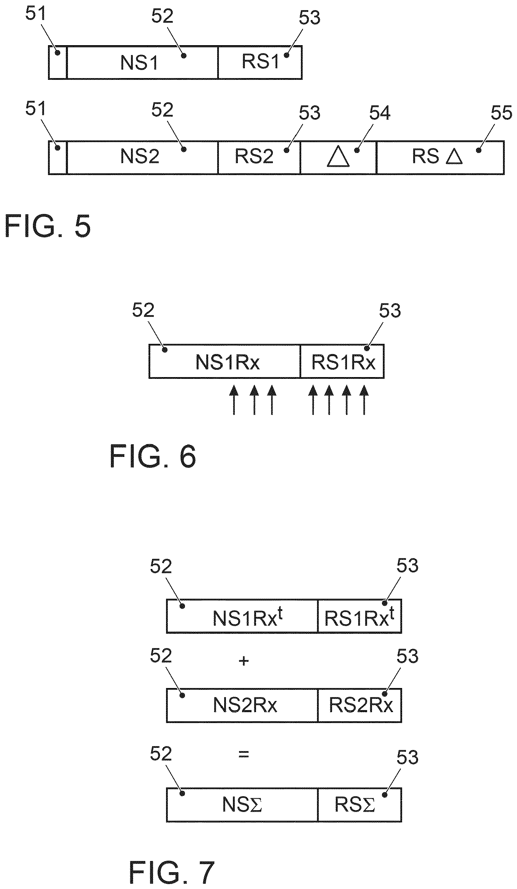

Fig. 5 zeigt das Format des ersten und des zweiten Informationsblocks wie sie auf der Sendeseite erzeugt werden. Im oberen Teil ist das Format des ersten Informationsblocks gezeigt mit einem Feld 51 in dem der Fehlerschutztyp angegeben ist. In dem Feld 52 finden sich die eigentlichen Nutzdaten NS1 der Statusmeldung 1. Im Feld 53 werden die Fehlerschutzdaten RS1 eingetragen. Angewendet wird in diesem Beispiel ein Reed-Solomon-Code. Dieser Fehlerschutz-Code ist ein Block-Code und steht getrennt von den Nutzdaten in dem separaten Feld 53. Das Prinzip der Erfindung ist aber auch anwendbar, wenn ein Faltungscode als FEC-Fehlerschutz-Code eingesetzt wird, also z.B. bei Verwendung eines Turbo-Codes wobei dann Nutzdaten und Fehlerschutzdaten in einem gemeinsamen Feld enthalten sind.

Im unteren Teil von Fig. 5 ist das Format des zweiten Informationsblocks gezeigt. Feld 52 enthält die Nutzdaten NS2 des zweiten Informationsblocks. In Feld 53 stehen die Fehlerschutzdaten zu NS2. Dann folgt ein Feld 54, in dem die Delta-Information eingetragen wird, die in Block 305 auf Sendeseite ermittelt wird. In Feld 55 werden die Fehlerschutzdaten RS-Delta für die Deltainformation eingetragen. Feld 51 enthält den Fehlerschutztyp für RS2 und RS-Delta.

Fig. 6 zeigt wie das Delta-Signal in die im Empfangspuffer 326 gespeicherte Version des ersten Informationsblocks eingearbeitet wird. Dazu nutzt die Delta-Anwendungseinheit 328 die aus dem zweiten Informationsblock zurück gewonnene Delta-Information und führt die Operation des Bit-Flippings wie oben erwähnt durch Vorzeichenwechsel an den durch die Delta-Information angezeigten Bitstellen im Feld 52 mit den fehlerbehafteten Nutzdaten NS1Rx und im Feld 53 mit den möglicherweise ebenfalls fehlerbehafteten Fehlerschutzdaten RS1Rx durch.

Fig. 7 zeigt schließlich den Schritt des Soft-Combining, des umgewandelten ersten Informationsblock mit dem zweiten Informationsblock, wie er in der Soft-Combining Einheit 330 stattfindet. Es werden die Softinformationen zu NS2Rx und NS1Rxt addiert. Es werden ebenfalls die Softinformationen zu RS2Rx und RS1Rxt addiert. Die resultierende Summeninformation wird NS$\Sigma$ und RS$\Sigma$ wird dem Kanaldekodierer 324 zugeführt und dekodiert. Bei Erfolg wird die Nutzinformation NS2 an eine höhere Schicht, z.B. die Applikationsschicht der Empfangsstation weitergegeben. In diesem Beispiel wird davon ausgegangen, dass die Delta-Information mit dessen Fehlerschutzanteil erst nach der Addition von dem Informationsblock abgeschieden wird. In einem anderen Ausführungsbeispiel kann dies schon vorher passieren.

Nochmals zur Zusammenfassung:

1. Ein erstes Nutzsignal (CAM-Statusmeldung 1) wird in der Sendestation verarbeitet und wie herkömmlich ausgesendet. Das Signal wird dazu kodiert und moduliert.

2. Ein oder n weitere n Nutzsignale (z.B. n = 9 Meldungen) werden vom Sender verarbeitet. Dazu erfolgt die Kanalkodierung des jeweiligen Nutzsignals. Bevor das jeweilig kodierte Nutzsignal moduliert ausgesendet wird, wird der bitweise Unterschied zum ersten kodierten Nutzsignal berechnet/generiert. Das Resultat beschreibt, welche Bits sich zwischen dem kodierten Signal der vorherigen Meldung und der aktuellen Meldung unterscheiden und wird im Folgenden mit Delta-Signal bezeichnet. Es wird ebenfalls per Kanalcodierung durch Fehlerschutz versehen, aber so, dass es von der eigentlichen Meldung unabhängig dekodiert werden kann. Sowohl das Nutzsignal als auch das generierte Delta-Signal werden gemeinsam moduliert und verschickt.

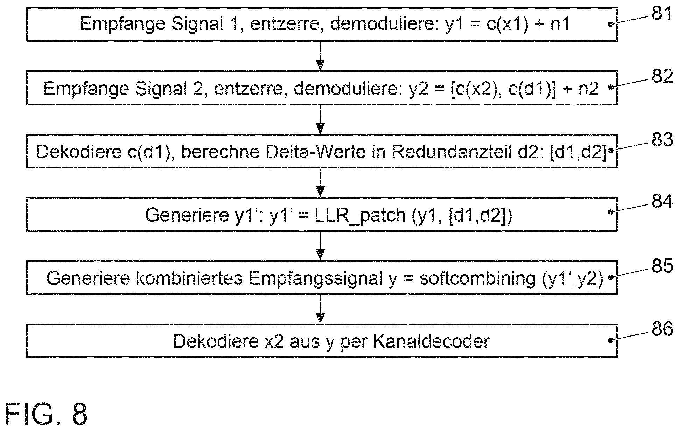

Fig. 8 zeigt den Ablauf der Bearbeitungsschritte in der Empfangsstation in einem bevorzugten Ausführungsbeispiel.

3. Die Empfangsstation führt eine Entzerrung der beiden Empfangssignale durch und demoduliert sie, aber dekodiert sie noch nicht, Schritte 81 und 82. Sie dekodiert zunächst das Delta-Signal, Schritt 83 und arbeitet dies in die Softinformation des Empfangssignals, das mit Statusmeldung 1 korrespondiert, ein, Schritt 84. Dies kann sehr effizient durchgeführt werden. Die Soft-Information zu einer Beobachtung am Empfänger liegt üblicherweise als Log-Likelihood-Ratio (LLR, definiert als log10(p0 / p1), wobei log10() die logarithmus-Funktion zur Basis 10, p0 die Wahrscheinlichkeit, dass das aktuelle Empfangssignal den Binärwert 0 repräsentiert und p1 die Wahrscheinlichkeit, dass das aktuelle Empfangssignal den Binärwert 1 repräsentiert) vor, was eine Anpassung durch einfache Vorzeichenwechsel ermöglicht. Von diesem veränderten Signal führt der Empfänger ein Soft-Combining mit dem Empfangssignal, das mit Statusmeldung 2 korrespondiert, durch, Schritt 85. Er dekodiert das kombinierte Signal und erhält dann das Nutzsignal von Statusmeldung 2, Schritt 86.

Sollte die Statusmeldung 1 zu diesem Zeitpunkt noch von Interesse sein, kann diese über das Deltasignal und einen erneuten Dekodiervorgang ebenfalls zurückgewonnen werden. Dazu wird die Deltainformation reziprok auf den zweiten Informationsblock angewendet um Y2' zu generieren. Dann folgt der Schritt 85 des Kombinierens von Y2' und Y1. Die Nutzinformation x1 wird dann durch erneutes Dekodieren im Kanaldekodierer 324 erhalten.

Bei den beschriebenen Ausführungsbeispielen bezog sich die Delta-Information sowohl auf den Nutzdatenteil wie auch auf den Fehlerschutzanteil. Es ist aber auch möglich dass sich die Delta-Information nur auf den Nutzdatenteil bezieht. Dies ist dann möglich, wenn das Delta-Signal kompakt ist. Dies ist genau dann der Fall, wenn als Kanalcodierung eine lineare systematische Kodierung (Input-Signal ist an fest vorgegebenen Stellen des kodierten Signals auffindbar) eingesetzt wird. In dem Fall beschränkt sich die zu übertragende Delta-Information auf Unterschiede im ursprünglichen Nutzsignal. Die Änderungen im Redundanzteil des kodierten Signals kann sich der Empfänger im linearen Code dann sehr effizient selbst erschließen. Das Verfahren funktioniert sowohl bei Blockcodes wie auch bei Faltungscodes.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein, oder ein Teil der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

**Bezugszeichenliste**

| | |
|---|---|
| 10 | Internet |
| 20 | Basisstation |
| 30 | Fahrzeug |
| 31 | On-Board Unit |
| 40 | Evolved Packet Core EPC |
| 50 | Flussdiagramm |
| 51 | Kopfteil |
| 52 | Nutzdatenfeld |
| 53 | Fehlerschutzdatenfeld |
| 54 | Delta-Informationsdatenfeld |
| 55 | Delta-Fehlerschutzdatenfeld |
| 81 | 1. Verarbeitungsschritt |
| 82 | 2. Verarbeitungsschritt |
| 83 | 3. Verarbeitungsschritt |
| 84 | 4. Verarbeitungsschritt |
| 85 | 5. Verarbeitungsschritt |
| 86 | 6. Verarbeitungsschritt |
| 302 | Kanalcodierungseinheit |
| 304 | Sendepufferspeicher |
| 305 | Deltainformations-Erzeugungseinheit |
| 306 | Rate Matching-Einheit |
| 308 | Modulations- & Sendeeinheit |
| 310 | Sendeantenne |
| 320 | Empfangsantenne |
| 322 | Empfangs- & Demodulationseinheit |
| 324 | Kanaldecodierungseinheit |
| 326 | Empfangspufferspeicher |
| 328 | Deltainformations-Anwendungseinheit |
| 330 | Softkombinierungseinheit |

**Patentansprüche**

1. Verfahren zur digitalen Übertragung von Datenblöcken von einer Sendestation (31) zu einer Empfangsstation (31), wobei die Datenblöcke auf der Sendeseite mit Fehlerschutzdaten versehen werden **dadurch gekennzeichnet, dass** der mit Fehlerschutz versehene Datenblock jeweils in einer Nachricht über einen gestörten Übertragungskanal zu der Empfangsstation übertragen wird, wobei für die Übertragung mindestens eines weiteren Datenblocks auf Sendeseite festgestellt wird, an welchen Stellen der weitere Datenblock sich von dem vorhergehenden Datenblock unterscheidet, dass die so gewonnene Deltainformation mit eigenen Fehlerschutzdaten versehen wird, dass die Deltainformation zu dem mit Fehlerschutz versehenen mindestens einem weiteren Datenblock hinzugefügt wird und der auf diese Weise erweiterte weitere Datenblock über den gestörten Übertragungskanal zu der Empfangsstation (31) übertragen wird, wobei der empfangene erste und der mindestens eine erweiterte weitere Datenblock inklusive Fehlerschutzanteil in der Empfangsstation (31) abgespeichert wird (81, 82), dass zunächst die Deltainformation des mindestens einen erweiterten weiteren Datenblocks unter Anwendung der Fehlerschutzdaten für die Deltainformation zurückgewonnen wird (83), dass die Deltainformation auf den abgespeicherten vorhergehenden Datenblock angewendet wird (84) um diesen in eine Form zu bringen, die ihn mit dem mindestens einen weiteren Datenblock vergleichbar macht, dass der empfangene mindestens eine weitere Datenblock und der umgewandelte vorhergehende Datenblock kombiniert werden (85), und dass aus dem kombinierten Datenblock die Nutzinformation des weiteren Datenblocks zurückgewonnen wird (86).

2. Verfahren nach Anspruch 1, wobei die Deltainformation mit einem höheren Fehlerschutz versehen wird als der weitere Datenblock.

3. Verfahren nach Anspruch 1 oder 2, wobei die Deltainformation angibt, an welchen Stellen in dem codierten weiteren Datenblock eine Dateninformation anders gesetzt ist als in dem vorhergehenden codierten Datenblock.

4. Verfahren nach Anspruch 3, wobei die Dateninformation einer Bitinformation entspricht.

5. Verfahren nach einem der vorhergehenden Ansprüche, wobei der empfangene vorhergehende Datenblock und der mindestens eine erweiterte weitere Datenblock jeweils in Form eines abgetasteten Signals vor oder nach der digitalen Demodulation abgespeichert wird.

6. Verfahren nach Anspruch 5, wobei der empfangene vorhergehende Datenblock und der mindestens eine erweiterte weitere Datenblock nach Demodulation jeweils in Form eines Log Likelihood Ratio Softinformationsblock abgespeichert wird.

7. Verfahren nach Anspruch 5, wobei die Deltainformation reziprok auf den abgespeicherten mindestens einen weiteren Datenblock angewendet wird und der umgewandelte mindestens eine weitere Datenblock und der vorhergehende Datenblock kombiniert werden.

**8.** Verfahren nach Anspruch 6 oder 7, wobei die Kombination einer Addition von einander entsprechenden Softinformationswerten der zu kombinierenden Datenblöcke entspricht.

**9.** Verfahren nach Anspruch 6 oder 7, wobei zur Zurückgewinnung des mindestens einen weiteren Datenblocks oder des vorhergehenden Datenblocks eine Kanaldecodierung des kombinierten Datenblocks erfolgt.

**10.** Verfahren nach Anspruch 1 oder 2, wobei die Deltainformation angibt, an welchen Stellen in dem Nutzdatenfeld (52) des weiteren Datenblocks eine Dateninformation anders gesetzt ist als in dem Nutzdatenfeld (52) des vorhergehenden codierten Datenblocks.

**11.** Empfangsstation zur Anwendung bei dem Verfahren nach einem der Ansprüche 1 bis 10, **dadurch gekennzeichnet, dass** die Empfangsstation (31) Speichermittel (326) aufweist, die einen vorhergehenden in einer Nachricht übertragenen Datenblock und mindestens einen, in einer weiteren Nachricht übertragenen erweiterten weiteren Datenblock inklusive Fehlerschutzanteil abspeichern, weiterhin **gekennzeichnet durch** eine Kanaldecodierungseinheit (324), die den abgespeicherten ersten und mindestens einen erweiterten weiteren Datenblock decodiert, wobei zunächst die Deltainformation des mindestens einen erweiterten weiteren Datenblocks unter Anwendung der Fehlerschutzdaten für die Deltainformation decodiert wird, dass eine Verarbeitungseinheit (328) die Deltainformation auf den abgespeicherten vorhergehenden Datenblock anwendet, um diesen in eine Form zu bringen, die ihn mit dem mindestens einen weiteren Datenblock vergleichbar macht, dass eine Kombinierungseinheit (330) den empfangenen mindestens einen weiteren Datenblock und den umgewandelten vorhergehenden Datenblock kombiniert, und dass die Kanaldecodierungseinheit (324) den kombinierten Datenblock decodiert, um die Nutzinformation des weiteren Datenblocks zurückzugewinnen.

**12.** Empfangsstation nach Anspruch 11, wobei die Speichermittel (326) den empfangenen vorhergehenden Datenblock und den mindestens einen erweiterten weiteren Datenblock nach Demodulation jeweils in Form eines Log Likelihood Ratio Softinformationsblock abspeichern.

**13.** System zur Durchführung des Verfahrens nach einem der Ansprüche 1 bis 10, mit einer Empfangsstation (31) nach Anspruch 11 oder 12, und einer Sendestation (31), aufweisend eine Kanalcodierungseinheit (302), die einen Datenblock mit Fehlerschutzdaten versieht, wobei die Sendestation (31) eine Verarbeitungseinheit (305) aufweist, die den Datenblock inklusive Fehlerschutzdaten in einer ersten Nachricht versendet, und die für die Übertragung mindestens eines weiteren Datenblocks ermittelt, an welchen Stellen der weitere Datenblock sich von dem zuvor versendeten vorhergehenden Datenblock unterscheidet, dass die Kanalcodierungseinheit (302) den weiteren Datenblock mit Fehlerschutzdaten versieht, dass die Kanalcodierungseinheit (302) die so gewonnene Deltainformation mit eigenen Fehlerschutzdaten versieht, und die Deltainformation inklusive der eigenen Fehlerschutzdaten zu dem mit Fehlerschutz versehenen mindestens einem weiteren Datenblock hinzufügt und in einer weiteren Nachricht versendet.

**14.** System nach Anspruch 13, **dadurch gekennzeichnet, dass** die Kanalcodierungseinheit (302) die Deltainformation mit einem höheren Fehlerschutz versieht als die Information des weiteren Datenblocks.

**15.** Kraftfahrzeug, **dadurch gekennzeichnet, dass** in dem Kraftfahrzeug eine Empfangsstation (31) nach Anspruch 11 oder 12 oder ein System nach einem der Ansprüche 13 oder 14 verbaut ist.

**Claims**

**1.** Method for digitally transferring data blocks from a transmitting station (31) to a receiving station (31), wherein the data blocks are provided on the transmitting side with error protection data, **characterised in that** the data block provided with error protection is transmitted, respectively, to the receiving station in a message via a disturbed transfer channel, wherein on the transmitting side it is determined for transferring at least one further data block in which areas the further data block differs from the preceding data block, **in that** the delta information thus obtained is provided with own error protection data, **in that** the delta information is added to the at least one further data block provided with error protection and the thus expanded further data block is transferred via the disturbed transfer channel to the receiving station (31), wherein the received first and the at least one expanded further data block, including the error protection portion, are stored (81, 82) in the receiving station (31), **in that** at first the delta information of the at least one expanded further data block is recovered using the error protection data for the delta information (83), **in that** the delta information is applied to the stored preceding data block (84) for getting said data block into a form making it comparable with the at least one further data block, **in that** the received at least one further data block and the converted preceding data block are combined (85), and **in that** the user information of the further data block is recovered from the combined data block (86).

2. Method according to claim 1, wherein the delta information is provided with an error protection greater than the further data block.

3. Method according to claim 1 or 2, wherein the delta information indicates in which areas a data information is placed differently in the coded further data block than in the preceding coded data block.

4. Method according to claim 3, wherein the data information corresponds to a bit information.

5. Method according to one of the preceding claims, wherein the received preceding data block and the at least one expanded further data block are stored, respectively, in the form of a sampled signal prior to or after the digital demodulation.

6. Method according to claim 5, wherein the received preceding data block and the at least one expanded further data block are stored, respectively, after demodulation in the form of a Log Likelihood Ratio soft information block.

7. Method according to claim 5, wherein the delta information is applied reciprocally to the stored at least one further data block, and the converted at least one further data block and the preceding data block are combined.

8. Method according to claim 6 or 7, wherein the combination corresponds to an addition of correlating soft information values of the data blocks to be combined.

9. Method according to claim 6 or 7, wherein a channel decoding of the combined data block takes place to recover the at least one further data block or the preceding data block.

10. Method according to claim 1 or 2, wherein the delta information indicates in which areas in the user data field (52) of the further data block a data information is placed differently than in the user data field (52) of the preceding coded data block.

11. Receiving station for use with the method according to one of the claims 1 to 10, **characterized in that** the receiving station (31) has storage means (326) that store a preceding data block transferred in a message and at least one expanded further data block, including error protection portion, transferred in a further message, furthermore **characterized by** a channel decoding unit (324) that decodes the stored first and at least one expanded further data block, wherein at first the delta information of the at least one expanded further data block is decoded using the error protection data for the delta information, in that a processing unit (328) uses the delta information on the stored preceding data block for getting it into a form making it comparable with the at least one further data block, in that a combination unit (330) combines the received at least one further data block and the converted preceding data block, and in that the channel decoding unit (324) decodes the combined data block to recover the user information of the further data block.

12. Receiving station according to claim 11, wherein the storage means (326) store, respectively, the received preceding data block and the at least one expanded further data block after demodulation in the form of a Log Likelihood Ratio soft information block.

13. System for operating the method according to one of the preceding claims 1 of 10, with a receiving station (31) according to claim 11 or 12, and a transmitting station (31), having a channel coding unit (302) providing a data block with error protection data, wherein the transmitting station (31) has a processing unit (305) transmitting the data block including error protection data in a first message, and determining for transferring at least one further data block in which areas the further data block differs from the preceding data block transmitted prior to this, the channel coding unit (302) providing the further data block with error protection data, the channel coding unit (302) providing the delta information thus obtained with own error protection data, and adds the delta information including the own error protection data to the at least one further data block provided with error protection and sends it in a further message.

14. System according to claim 13, **characterized in that** the channel coding unit (302) provides the delta information with an error protection greater than the information of the further data block.

15. Motor vehicle, **characterized in that** a receiving station (31) according to claim 11 or 12 or a system according to one of the claims 13 or 14 is installed in the motor vehicle.

**Revendications**

1. Procédé de transmission numérique de blocs de données d'une station émettrice (31) à une station de réception (31), dans lequel les blocs de données sont munis de données de protection contre les erreurs du côté émission, **caractérisé en ce que** le bloc de données muni d'une protection contre les erreurs est transmis dans chaque cas dans un message à la station de réception à travers un canal de transmission perturbé, dans lequel, pour la transmission d'au moins un autre bloc de données, il est établi du côté émission, à quels emplacements l'autre bloc de données se distingue du bloc de données précédent, **en ce que** l'information delta ainsi récupérée est munie de ses propres données de protection contre les erreurs, **en ce que** l'information delta est ajoutée au au moins un autre bloc de données muni de la protection contre les erreurs et l'autre bloc de données élargi de cette façon est transmis à la station de réception (31) à travers le canal de transmission perturbé, dans lequel, le premier bloc de données reçu et le au moins un autre bloc de données élargi comprenant une partie de protection contre les erreurs sont stockés (81, 82) dans la station de réception (31), **en ce que** d'abord l'information delta du au moins un autre bloc de données élargi est récupérée à l'aide des données de protection contre les erreurs pour l'information delta (83), **en ce que** l'information delta est utilisée dans le bloc de données précédent stocké (84) pour lui donner une forme, qui le rende comparable avec le au moins un autre bloc de données, **en ce que** le au moins un autre bloc de données reçu et le bloc de données précédent converti sont combinés (85), et **en ce que** l'information utile de l'autre bloc de données est récupérée du bloc de données combiné (86).

2. Procédé selon la revendication 1, dans lequel l'information delta est munie d'une protection contre les erreurs supérieure à celle de l'autre bloc de données.

3. Procédé selon la revendication 1 ou 2, dans lequel l'information delta indique à quels emplacements dans l'autre bloc de données codé, une information de données est insérée d'une façon différente par rapport au bloc de données précédent codé.

4. Procédé selon la revendication 3, dans lequel l'information de données correspond à une information binaire.

5. Procédé selon l'une des revendications précédentes, dans lequel le bloc de données précédent reçu et le au moins un autre bloc de données élargi sont stockés dans chaque cas sous la forme d'un signal échantillonné avant ou après la démodulation numérique.

6. Procédé selon la revendication 5, dans lequel le bloc de données précédent reçu et le au moins un autre bloc de données élargi sont stockés après la démodulation dans chaque cas sous forme d'un bloc d'informations incertaines du type Logarithme du rapport de vraisemblance.

7. Procédé selon la revendication 5, dans lequel l'information delta est utilisée réciproquement dans le au moins un autre bloc de données stocké et le au moins un autre bloc de données converti et le bloc de données précédent sont combinés.

8. Procédé selon la revendication 6 ou 7, dans lequel la combinaison correspond à un ajout de valeurs d'informations incertaines correspondant l'une à l'autre des blocs de données devant être combinés.

9. Procédé selon la revendication 6 ou 7, dans lequel pour la récupération du au moins un autre bloc de données ou du bloc de données précédent, un décodage de canal du bloc de données combiné se produit.

10. Procédé selon la revendication 1 ou 2, dans lequel l'information delta indique à quels emplacements dans le champ de données d'utilisateur (52) de l'autre bloc de données, une information de données est insérée d'une façon différente par rapport au champ de données d'utilisateur (52) du bloc de données précédent codé.

11. Station de réception prévue pour l'utilisation dans le procédé selon l'une des revendications 1 à 10, **caractérisée en ce que** la station de réception (31) comporte des moyens de stockage (326), qui stockent un bloc de données précédent transmis dans un message et au moins un autre bloc de données élargi, transmis dans un autre message, comprenant une partie de protection contre les erreurs, également **caractérisée par** une unité de décodage de canal (324), qui décode le premier bloc de données stocké et au moins un autre bloc de données élargi, dans laquelle d'abord l'information delta du au moins un autre bloc de données élargi est décodée à l'aide des données de protection contre les erreurs pour l'information delta, en ce qu'une unité de traitement (328) utilise l'information delta dans le bloc de données précédent stocké, pour le mettre sous une forme, qui le rende comparable avec le au moins un autre bloc de données, en ce qu'une unité de combinaison (330) combine le au moins un autre bloc de données reçu et le bloc de données précédent converti, et en ce que l'unité de décodage de canal (324) décode le bloc de données combiné, pour récupérer l'information utile de l'autre bloc de données.

12. Station de réception selon la revendication 11, dans laquelle les moyens de stockage (326) stockent le bloc de données précédent reçu et le au moins un autre bloc de données élargi après une démodulation dans chaque cas sous la forme d'un bloc d'informations incertaines du type Logarithme du rapport de vraisemblance.

**13.** Système pour la réalisation du procédé selon l'une des revendications 1 à 10, avec une station de réception (31) selon la revendication 11 ou 12, et une station émettrice (31), comportant une unité de codage de canal (302), qui pourvoit un bloc de données de données de protection contre les erreurs, la station émettrice (31) comportant une unité de traitement (305), qui envoie le bloc de données comprenant les données de protection contre les erreurs dans un premier message, et qui détermine pour la transmission d'au moins un autre bloc de données à quels emplacements l'autre bloc de données se distingue du bloc de données précédent envoyé auparavant, l'unité de codage de canal (302) pourvoyant l'autre bloc de données de données de protection contre les erreurs, l'unité de codage de canal (302) pourvoyant l'information delta ainsi récupérée de ses propres données de protection contre les erreurs, et ajoute l'information delta comprenant ses propres données de protection contre les erreurs au au moins un autre bloc de données pourvu de protection contre les erreurs et l'envoie dans un autre message.

**14.** Système selon la revendication 13, **caractérisé en ce que** l'unité de codage de canal (302) pourvoit l'information delta d'une protection contre les erreurs plus élevée que pour l'information de l'autre bloc de données.

**15.** Véhicule automobile, **caractérisé en ce que**, dans le véhicule automobile une station de réception (31) selon la revendication 11 ou 12 a été installée ou un système selon l'une des revendications 13 ou 14 a été installé.

FIG. 1

FIG. 2

FIG. 3

FIG. 4

EP 3 293 903 B1

51  52  53

NS1 | RS1

51  52  53  54  55

NS2 | RS2 | △ | RS △

# FIG. 5

52  53

NS1Rx | RS1Rx

↑ ↑ ↑   ↑ ↑ ↑ ↑

# FIG. 6

52  53

NS1Rx$^t$ | RS1Rx$^t$

52  +  53

NS2Rx | RS2Rx

52  =  53

NSΣ | RSΣ

# FIG. 7

Empfange Signal 1, entzerre, demoduliere: $y_1 = c(x_1) + n_1$ ———81

Empfange Signal 2, entzerre, demoduliere: $y_2 = [c(x_2), c(d_1)] + n_2$ ———82

Dekodiere $c(d_1)$, berechne Delta-Werte in Redundanzteil $d_2$: $[d_1, d_2]$ ———83

Generiere $y_1'$: $y_1' = LLR\_patch (y_1, [d_1, d_2])$ ———84

Generiere kombiniertes Empfangssignal $y = softcombining (y_1', y_2)$ ———85

Dekodiere $x_2$ aus $y$ per Kanaldecoder ———86

# FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6728920 B1
- US 20130148569 A1
- US 20090307559 A1
- EP 2403174 A1